**Europäisches Patentamt**

**European Patent Office**

**Office européen des brevets**

(11) Publication number: **0 201 308**
**B1**

(12) **EUROPEAN PATENT SPECIFICATION**

(45) Date of publication of patent specification: **27.06.90**

(51) Int. Cl.⁵: **H 04 L 12/54**

(21) Application number: **86303406.2**

(22) Date of filing: **06.05.86**

(54) **Radio networks.**

(30) Priority: **06.05.85 US 731189**

(43) Date of publication of application:
**12.11.86 Bulletin 86/46**

(45) Publication of the grant of the patent:
**27.06.90 Bulletin 90/26**

(84) Designated Contracting States:
**BE FR GB**

(73) Proprietor: **International Standard Electric Corporation**
**320 Park Avenue**
**New York New York 10022 (US)**

(72) Inventor: **Lee, William Chien-Yeh**
**9 Hickory Road**
**Denville, NJ. (US)**

(74) Representative: **Vaufrouard, John Charles et al**
**RUFFHEAD & VAUFROUARD Maidstone Road**
**(S.T.C. Site) Foots Cray**
**Sidcup Kent DA14 5HT (GB)**

(56) References cited:
ELECTRONIC DESIGN, vol. 33, no. 2, January 1985, pages 83-92, Hasbrouck Heights, New Jersey, US; R. WEISS: "Computer architectures: varied blueprints will lift system speeds to dizzying heights"

PROCEEDINGS OF THE NAT. CONF. ON ARTIFICIAL INTELLIGENCE, 1982, pages 370-372; D. McDERMOTT et al.: "ARBY: diagnosis with shallow causal models"

(56) References cited:
NATIONAL TELECOMMUNICATIONS CONFERENCE, New Orleans, 29th November - 3rd December 1981, vol. 1, pages A3.2.1-A3.3.7, School of Electronic and Electrical Engineering, Aberdeen, GB; M.S. CHRYSTALL et al.: "Adaptive routing in computer communication networks using learning automata"

# EP 0 201 308 B1

56 References cited:
IEEE COMMUNICATIONS MAGAZINE, vol. 21,
no. 4, July 1983, pages 34-41, IEEE, New York,
US; K. BRAYER: "Implementation and
performance of survivable computer
communication with autonomous decentralized
control"

IEEE REGION 5 CONFERENCE, Lubbock, Texas,
13th-15th March 1985, pages 25-30; D.W.
CANDY et al.: "Industrial applications of artificial
intelligence"

NATIONAL TELECOMMUNICATIONS
CONFERENCE, Birmingham, Alabama, 3rd-6th
December 1978, vol. 1, pages 4.1.1-4.1.5, IEEE;
T.-S. YUM et al.: "Comparison of adaptive
routing algorithms for computer
communication networks"

## Description

This invention relates to a communication system comprising means for transmitting and/or receiving signals at radio frequencies and one or more means, each comprising an artificial intelligence module, each of which is coupled to an associated one of the transmitting and/or receiving means, in which at least one of the transmitting and/or receiving means is a packet radio transmitting and/or receiving digital signals at radio frequencies, and in which each of the artificial intelligence modules comprises an inference engine, a memory for storing data received from the receiving means and for transmitting the data to the inference engine, a memory for storing rules for an artificial intelligence system, the memory being connected to the inference engine, and a memory for storing a knowledge base, the knowledge base memory being connected to the rule base memory and the inference engine.

Packet radio systems may be generally described as groups of radio transceivers intermittently exchanging short bursts or "packets" of digital information. The packets of digital information modulate the very high frequencies (VHF) or ultra-high frequencies (UHF) at which packet radio systems operate. Generally, at any particular instant in time only one radio of the system can operate in the transmission mode while all other radios are in a receive mode. The packet sent by the transmitting radio contains the addresses of the receiving locations and the originating terminal in a header, as well as the digital information being transmitted.

Problems arise when two radios attempt to transmit simultaneously or nearly simultaneously. When transmitted packets interfere with each other in this manner, they must be retransmitted at different later times.

Another important feature of a packet radio system is that the connectivity paths established in such a system require each radio in the network to act as a repeater in retransmitting messages to stations too distant to be reached directly by the original transmitting station.

Electronic Design, January 1985, No. 2, pages 83—92, Hasbronck Heights, New Jersey, U.S.; R. Weiss: "Computer Architectures..." discloses a communication system, comprising plural radio transmitting and/or receiving means and comprising artificial intelligence (AI) modules in each mode of the system for establishing connectivity paths among said different nodes and providing therefore a decentralised AI-controlled packet switching network, see (1), pages 86—88, "working in parallel" and "extending parallel lines".

This citation discloses the prior art acknowledged in the preamble to claim 1 of the present application.

The paper "Advances in packet Radio Technology" submitted by Robert E. Kahn et al in the Proceedings of the IEEE, Volume 66, No. 11, pages 1468—1496 (November 1978) discloses a packet radio system having one of more network control nodes called stations. Connectivity and routing for this system are provided by conventional software programmes maintained at the stations which must be dedicated to the routing connectivity of the network. In Kahn's system, the control stations perform labelling functions which keep track of the locations of packet radios (some of which can act as relays) and the number of hops associated with routing through these packet radios. This requires a periodic broadcasting of identification signals called "Radio-on Packet" signals from the packet radios to the central station.

The Kahn system requires careful attention to the numerical ratio of stations to radios and the interaction between stations controlling different sets of radios in different geographical areas of the network. Thus, the stations handle the routing for each of the radios throughout the network, and loss or failure of a station results in a lack of operability for a period of time until another station is accessed or the original station replaced. If no station is available, each radio at a particular network segment can operate in a broadcast mode to establish a route to a particular destination.

Another prior art system is disclosed in the paper "A Distributed Routing Design for a Broadcast Environment" by Jil Westcott and John Jubin, presented on pages 10.4—1 to 10.4—4 of the IEEE MILCOM Proceeding, Oct. 18—20, 1982. This system employs a routing algorithm, known as tiered rings, which functions by building a distributed tree of shortest path routes to each packet radio in the network. The algorithm is fixed and employs periodic broadcasting.

The paper "Dynamic Routing and Call Repacking in Circuit-Switched Networks" by A. Girard and S. Hurtubise, which appeared in IEEE Transactions on Communications, volume COM 31, No. 12, December 1983 discloses the use of various algorithms in routing strategies for packet-switching networks.

One problem with the systems mentioned above which employ the conventional algorithmic approach to routing packet radio systems is that a large active network using this method will require significant storage space and processing time to provide these routing indicators. Also, such systems may not be able to process in real time. Additionally, the conventional algorithmic approach is not flexible. When an unexpected situation occurs, such systems cannot provide any solutions. The conventional algorithmic approach can provide one solution if all the expected inputs are available, but no solutions otherwise.

The system of the present invention has as a primary object the use of artificial intelligence to determine the routing and connectivity of a radio, static, or mixed network.

The system of the present invention has as a further object the elimination of all central stations, thus providing for a stationless mode of network connectivity as a normal procedure (not as a degraded mode of operation as in prior art systems). The elimination of these vulnerable network routing nodes (stations) has a significant positive impact on cost, survivability and availability of communications in tactical packet radio networks such as are used by the military.

Still another object of the present invention is to minimise the use of the broadcast mode in which each radio operates in a transmission mode to establish a route to a particular destination. Instead, the created knowledge base for the systems of the subject invention is acquired from the available information obtained from routing indicators and information during the normal operation of packet transmissions through the network.

According to one aspect of the invention there is provided a communication system comprising means for transmitting and/or receiving signals at radio frequencies and one or more means, each comprising an artificial intelligence module, each of which is coupled to an associated one of the transmitting and/or receiving means, in which at least one of the transmitting and/or receiving means is a packet radio transmitting and/or receiving digital signals at radio frequencies, characterised in that each of the artificial intelligence modules comprises an inference engine, a memory for storing data received from the receiving means and for transmitting the data to the inference engine, a memory for storing rules for an artificial intelligence system, the memory being connected to inference engine, and a memory for storing a knowledge base, the knowledge base memory being connected to the rule base memory and the inference engine, in that the knowledge base memory base comprises a first knowledge base memory containing all possible transmission routes, and a second knowledge base memory containing only one optimum route for each transmission path from a particular transmitter to a particular receiver in the system and in that the rule base memory may be preprogrammed prior to the establishment of the system and/or programmed after system establishment with a set of rules which are heuristic in that they allow for a plurality of routing transmissions to be selected once the minimum criteria established by the rule base are met.

The major differences between a radio system using an AI packet radio transmission system, and that using an algorithm for routing, are as follows:

a. In conventional programming, if a system is not completely defined, an algorithm can still be chosen and programmed. However, when more complete specification of the system is obtained, requiring the algorithm to be modified or changed, the whole programme must often be rewritten. In a rule based AI system, the rules are simply changed without affecting the remainder of the programme (the production system).

b. The AI system can provide a solution from its knowledge base, frequently updated, with a very rapid response during actual routing operations, but the algorithm programme must always make a complete calculation, running the data base input through the algorithm in order to obtain a solution.

c. AI has the flexibility for self-learning, but algorithmic programming does not, and instead can only use adaptive methods (as noted in the aforementioned Westcott article).

d. AI provides several good solutions but the algorithmic solution gives only an optimum one.

Embodiments of the invention will now be described by way of example with reference to the accompanying drawings in which:

Figure 1 discloses a schematic of a prior art packet radio network;

Figure 2 discloses a block diagram of the artificial intelligence module;

Figure 3 discloses a detailed schematic of the artificial intelligence module and its interface with the packet radio network;

Figure 4 shows a packet radio network according to the present invention;

Figure 5 shows a block diagram of the various system elements with which the OPS5 programming language interacts;

Figure 6 shows examples of the data stored in the knowledge bases of the artificial intelligence module;

Figure 7 shows a printout of information in the aforementioned knowledge base; and

Figure 8 shows a block diagram of a multimedia system employing AI modules.

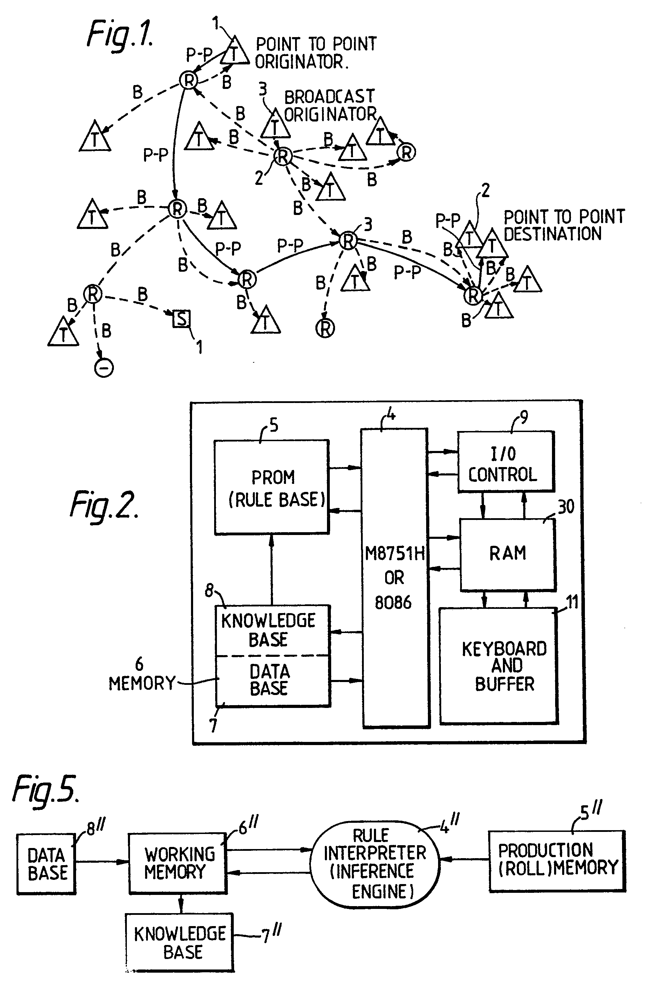

Figure 1 shows a typical prior art packet radio network. In this figure, the blocks designated T represent user terminals comprising a radio transceiver, as well as a digital processor which contains appropriate memory and a microprocessor for respectively storing and processing the digital information which is exchanged with the other packet radios in the network. The digital processor contains algorithms for the connectivity and routing for this system.

In Figure 1, the letter R designates a repeater, and the letter S denotes a central control station. Also, the letters P—P indicate a point-to-point connection and the letter B indicates a broadcast connection.

In the point-to-point routing procedure, a packet originating at one part of the network proceeds directly through a series of one or more repeaters until it reaches its final destination. The point-to-point route is first determined by a central station node which is the only element in the network which knows the current overall system connectivity.

An alternative method of communication in the aforementioned prior art network is the operation of each packet radio in a broadcast mode to establish a route to a particular destination. Obviously, this is not a particularly efficient mode of operation for two party communications in a network. However, such a transmission mode may become necessary when a central station node is lost for any reason.

As with the packet radio network of the present invention, all elements of the aforementioned prior art packet radio network can be mobile, or certain elements can be fixed while others are in motion. The prior art system, however relies on one or more network control nodes (stations). Routing for this system is provided by conventional software programmes contained at the stations, which must be dedicated to the routing and connectivity of the network. In this system, the stations perform labelling functions which keep track of the locations of packet radios (PR), which can act as relays, as well as the number of links associated with routing through these packet radios. The system requires careful control of the numerical ratio of stations-to-radios and the interactions between stations controlling different sets of radios in different geographical locations in the network. The stations handle the routing for each of the radios throughout the network, and loss or failure of the station results in a lack of operability for a period of time until another station is accessed or the original station is replaced. Should no station be available, as mentioned previously, each of the radios can operate in a broadcast mode to establish a route to a particular destination.

The stationless network disclosed by the present invention eliminates the need for carefully developed protocols stated in complicated software algorithms and for the consequent inefficient use of air time for transmission of radio location and routing information between stations and radios. The present invention enhances the conventional algorithmic approach by adding the flexibility and simplicity inherent in the use of artificial intelligence for distributed routing. It also provides for the use of AI alone when insufficient data are available for an algorithmic solution.

The stationless routing scheme assisted by AI allows each network radio to determine its own best estimate of the routing by use of an associated AI system with a knowledge base which is acquired, developed, and maintained in real time after the radio joins the network. The use of the inefficient broadcast mode to obtain routing is seldom necessary. Instead, the AI data base is first obtained from routing indicators and information during the normal operation of packet transmissions through the network. Although the data bases associated with the packet radio as used in the present system may be less complete than in the case of a network using stations, this situation is overcome by the use of a rule base associated with a heuristic approach to generate a knowledge base. This heuristic approach gives several outstanding estimates of the routing required. The heuristic approach may use other information such as statistical criteria for establishing routes. The end result is a significant reduction in transmission time for routing through the network, and thus an improved utilisation of the network for message traffic. In the artificial intelligence system of the present invention, the suggested route is up to date, and the system allows the user to obtain it instantaneously. In the prior art systems, the acquisition period of the optimum route depended on the complexity of the algorithm being used at the time of the user request.

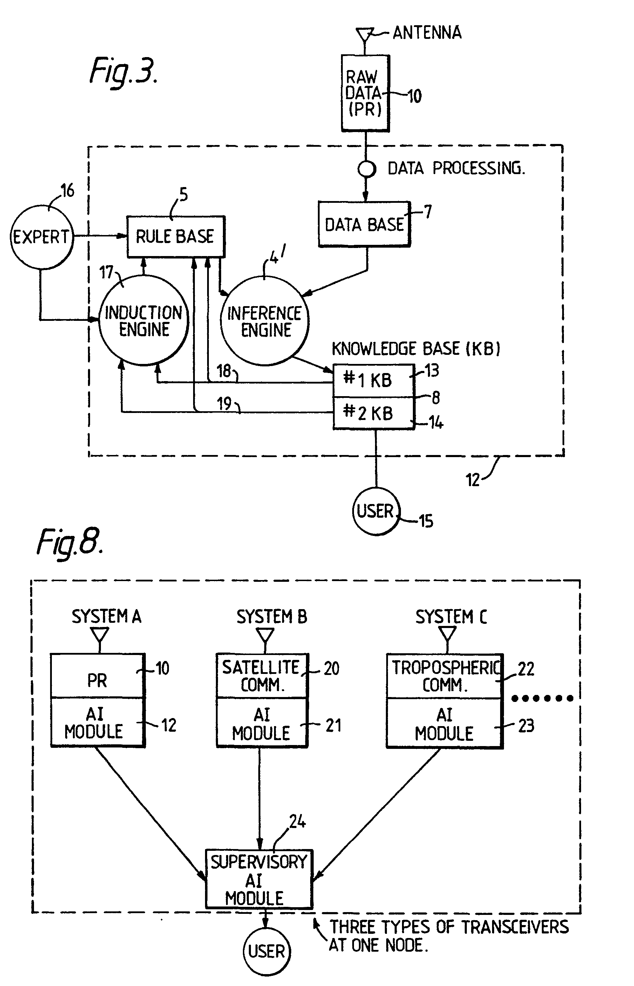

Figure 2 shows a block diagram of the artificial intelligence module of the invention. In this diagram, reference numeral 4 denotes a microprocessor which functions, in part, as the inference engine of the artificial intelligence scheme. Microprocessors which might be used include either the M8751H or the 8086, both manufactured by Intel Corporation. Other components of the artificial intelligence module include the memory 6, which is divided into a data base 7 and a knowledge base (KB) 8 which has two sections 13 and 14 (KB #1 and KB #2 as shown in Figure 3), a programmable read only memory (PROM) 5, which functions as the rule base for the AI system, and a random access memory (RAM) 30, which stores such information as message headers and is accessible by both the keyboard 11 and input/output unit 9. Also present are an input keyboard and buffer unit 11 and an input/output control unit 9.

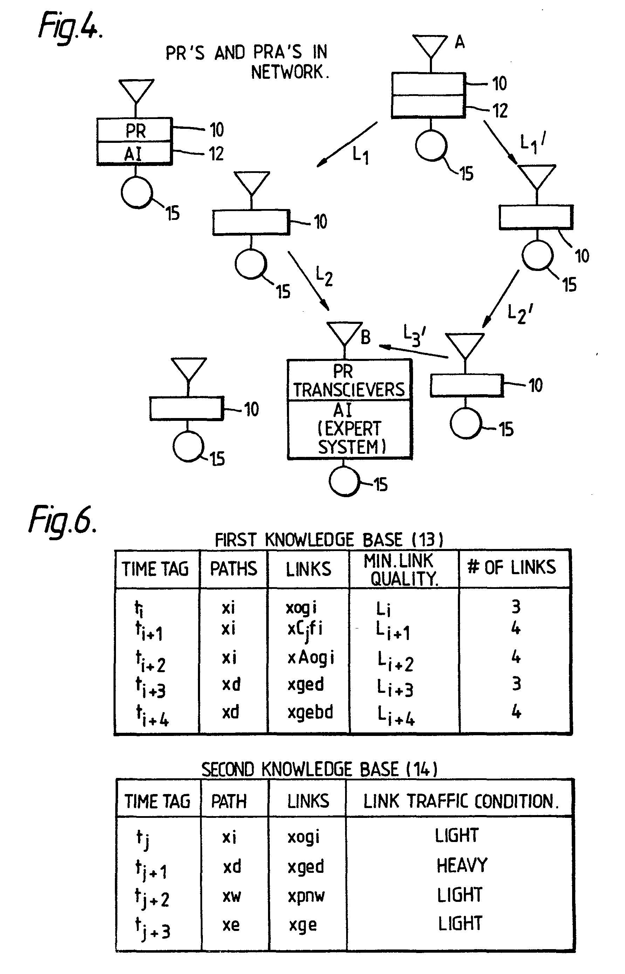

Figure 3 shows a schematic indicating operation of the artificial intelligence module. The packet ratio (PR) 10 shown in Figure 3 to which the artificial intelligence module 12 is connected may be of the type shown in Figure 6 of the aforementioned article "Advances in Packet Radio Technology", which was described with reference to Figure 1 of the present application. With regard to Figure 1, it is noted that a transceiver T and a repeater R are shown to be generally located at the same physical site, and that the artificial intelligence module will be mounted together with these modules whenever it is desired to add the desired artificial intelligence feature to a particular packet radio in the network. Alternatively, all transceivers T can be repeaters, as noted in the aforementioned Westcott article.

In a typical mode of operation, a PRA (P:R using AI) which comprises a packet radio such as known in the prior art together with the artificial intelligence module, will be placed into a packet radio network which is already in operation. When the PR transceiver is first turned on, the PRA will obtain raw data from the PR network real time packet headers which are flowing from radio to radio. This data is processed, for example, by the microprocessor 4, and stored in the data base 7 of the PRA. In order to shorten the updating of the PRA data base, it is also possible to have the data base 7 loaded initially from a neighbouring radio which is already operating in the network. Continuous updating of this data base will proceed as the network is monitored by the associated packet radio 10.

The inference engine 4' scans the data in the data base, matching this data with the criteria from the rule base 5 through the heuristic approach to generate information for the knowledge base 8 which consists, for example, only of routings which meet the minimum criteria established by the rule base 5. Initial rules are provided by the expert 16. The rules do not need to be in order. The knowledge base 8 will then contain a number of routing sequences each for a number of paths through the network between any potential originator radios and destination radios. If for some reason the first path chosen is not workable, the system has the ability to supply second, third, or as many options as may be necessary until the possible solutions are exhausted. Such multiple path information is stored in section 13 of the knowledge base. Its other section 14 contains only one route for each path. The information in the knowledge base 8 is updated in real time. Since the rule base provides the heuristic criteria, complete transmission paths can be derived when only partial path information is available.

The capacity for selecting rules or deleting rules may also be established in rule base 5. In Figure 3, a feedback loop is shown from the knowledge base 8 to the rule base 5 by which modification, by selecting or deleting, of the rules can be made based on information in the knowledge base 8. The rules in the rule base at the time when the system begins operation can be preprogrammed, or a set of rules can be derived by running various examples through the system.

Alternatively, the rules for the rule base 5 may be formulated by an induction engine 17 which operates by induction on information found in the knowledge base. One such induction engine programme is EXTRAN (*example translation*), a programme developed by Professor Michie of the University of Edinburgh. The expert 16 can either provide rules directly or give the examples which can be converted to rules by the induction engine.

It should be emphasised that the network control artificial intelligence system shown in Figure 3 provides good sequences even when there is insufficient information to define a well structured transmission problem. Unlike the prior art systems which depend from a single routing algorithm to give, assumably an optimum solution to a transmission path problem, the present system is flexible enough to suggest several good routing solutions. This is true even though the packet radio with artificial intelligence is required to meet stringent requirements on size, weight, processing speed, and power, such as would obtain for radio in a tactical military environment.

Figure 4 shows a typical packet radio network in accordance with the present invention. As shown therein, some of the packet radios 10 are not equipped with the artificial intelligence module 12 whereas others are so equipped.

The basis architecture for the exemplary OPS5 programming language used for the artificial intelligence function in the present invention is shown in Figure 5. The OPS5 language, developed by Carnegie-Mellon University, is a member of the class of programming languages known as production system languages. The various elements shown in Figure 5 function as follows:

Every rule in production (rule) memory 5″ contains the form of "if     conditions then do actions     ".

For purposes of convenience, the conditions are considered to be the left hand side (LHS) and the actions are considered to be the right hand side (RHS) of the formula. The working memory 6″ attributes values to the input data. Then the rule interpreter (inference engine) 4″ does a "recognise act cycle" as follows:

Step 1: The working memory 6″ and LHS of a rule are matched.

Step 2: One rule with a satisfied LHS is selected.

Step 3: The actions specified in the RHS of the selected rule are performed.

Step 4: Go to Step 1.

A typical rule for the present system employing OPS5 in the above-mentioned format is as follows.

*If*:

There is an active message for PRA (goal) and there is a PRA (name)

and there is no path between (goal) and (name)
but there is a connection between (goal)
and some other PRA (subgoal)
and this is not already a subgoal,

*Then*:

Make a new subgoal of getting to (subgoal)
record the path between the (goal) and (subgoal)
renew the time tags on the message and the PRA.

The "if" part is the "conditions" part representing LHS, and the "do" part is the "actions" part representing RHS. Both LHS and RHS are stored in the production memory 5″.

A typical application for the present system might use up to 100 rules. All the rules for the network connectivity are relatively simple. Thus, only portions of the OPS5 language must be used. Since such an amount of software can be easily handled by the microprocessors previously mentioned in the system, it is entirely feasible to regard each packet radio network as a candidate for obtaining distributed AI apparatus.

A typical operational scenario for the packet radio network begins with a system of packet radios that grows gradually from a very small number called into the field in a tactical situation. In this scenario, all packet radios with the AI modules (PRA) may be assumed to be located on mobile vehicles such as jeeps. There are no stations or control nodes as previously described with reference to the prior art in the present system. Initially, therefore, there will be little routing information in the knowledge base of each PRA. There may be contact with fixed locations employing a PRA, although the scenario does not require this. Thus, initial communications with the system will be the transmission of packets from radios (PRs) to their neighbours. Of course, some of these transmissions will reach PRs with AI modules (PRAs). As the digital packets flow between the radios, the data base of the PRAs will begin to build. As more PRAs join the network, use of the relay or repeater mode among radios will increase. The AI module in each PRA will abstract information from the traffic data received, and from the headers from the traffic data that it relays, so as to gradually build up its knowledge base of routing sequences to the various destinations. By the time the network is fully operational, the PRAs will have ongoing useful knowledge for routing to all or nearly all destinations in the network. The effectiveness of a packet radio network is maximised by having each PR of the network employ an AI module.

After the system has become fully operational, the AI system at each PRA will continue monitoring the system, thus abstracting information each time a packet is relayed or a neighbour is heard to maintain the knowledge base in real time and thus establish or maintain the useable routing sequences in the knowledge base of the PRA. The invention allows the use of distributed routing in the following manner. If suggested routing information is available in the knowledge base, a PRA may transmit, as an originator, a packet complete with a header which indicates a suggested routing sequence to a destination. The packet will then move from PRA to PRA with no requirement for a broadcast mode with each radio transmitting. Also, a flood search mode, wherein a PRA broadcasts as originator to determine available links to a desired destination, is not necessary. Moreover, with this concept, each PRA may modify the routing as the packet moves downstream and arrives at a PRA with better routing information in the direction of movement. If an originator has insufficient information on the complete routing sequence to his desired destination, then an incomplete routing sequence may be transmitted and completed by downstream PRA's as the packet moves along its path. This capability allows the use of a true distributed routing approach through the network. Furthermore, a second choice of routing or a third one can be provided if the first one fails.

When a PRA starts to join a network which is already in operation, its knowledge base is essentially empty. Upon joining the network, there are two options as follows:

1. If there is sufficient time and the PRA can wait, then its knowledge base may be built by monitoring its neighbours and acquiring routing information in real time from the headers transmitted.

2. Upon arrival at the network, the new PRA will request from one of its neighbours, the stored knowledge base information resident at that PRA to allow immediate entry to the network.

A PRA near the centre of the network will be called upon more frequently to relay information and will build its knowledge base more rapidly and completely than those PRAs on the periphery of the network. Thus, the data stored in the knowledge base will vary, depending on the geographical location of the PRA. Based on a simulation, a maximum size knowledge base for 29 PRAs in a network approximates six kilobits of data. Transfer of this knowledge base to a neighbour entering the network could be accomplished in a matter of a few seconds. A more abbreviated data base for this number of participants in a network can be accomplished in less than one second.

The routing information stored in the knowledge base will give information on the quality of each link in the system for which information has been acquired. A link is defined as a radio connection between two neighbours (a one hop connection). Time-tagged information will be available in the PRA data base on the quality for each link. This quality factor can be path loss, or bit error rate, or other indicators of the link quality. This information is originally obtained as the result of a transmission between two PRAs and is applied by the relaying PRA to its header, in addition to other previous link qualities shown in the header, before retransmission. This provides additional link quality data for each link to the relay stations further downstream toward the destination. Each PRA then processes this information to determine the paths which consist of multiple links from itself to any destination in the network. For each possible path to a given destination, the link in each path with the lowest link quality is used for comparison purposes. The path with its poorest link having the highest quality among other poorest links in other paths is used to determine the path to a given destination that will be stored ultimately in the PRA knowledge base. An example shown in Figure 4 has two paths from PRA A to PRA B. Assume that $L_2$ and $L'_2$ are the poorest links and $L'_2$ is greater than $L_2$. Some of the routing criteria that may be applied to determine the best of several paths to a given destination are as follows:

a) Elapsed time (based on time tags), with more recent information receiving higher weights;

b) Link quality;

3) Level of traffic over a particular link or, alternatively, delay through the link.

Many other types of criteria can be readily applied in this system and stored in the knowledge base to be operated upon by the rule base. These criteria can also be modified by application of statistical information based on known probabilities related to the network.

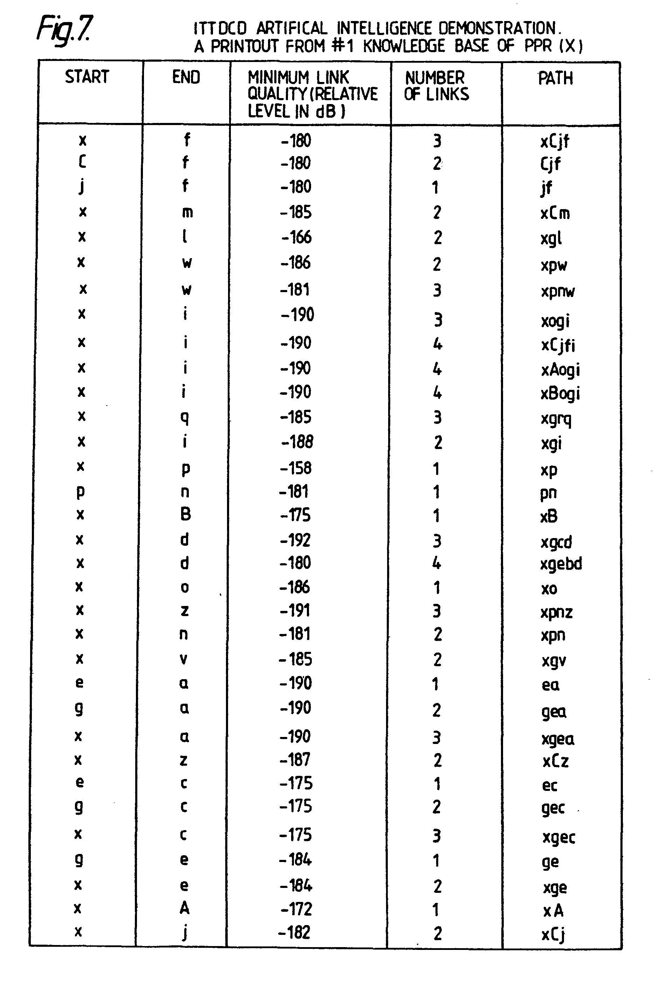

An example of the data stored in knowledge bases 13 and 14 is given in Figure 6. This table was based on information developed during the running of the aforementioned simulation. A printout of data stored in knowledge base 13 for the simulation is shown in Figure 7.

This system has been simulated on a VAX 11/780 system, running Berkeley 4.2 UNIX. The overall simulation has been developed in the LISP language, but the portion related to AI is done in the OPS5 language, as mentioned above.

The situation being simulated here is a stationless network of packet radios. These radios are distributed at pre-determined, random locations in a plane. In the demonstration of the AI network, the network simulation has the following capabilities:

a) originate, relay, and receive messages;

b) flood search;

c) send messages with an address, i.e., with a relay sequence specified in the header; and

d) record the history of message traffic that is passed through or received by PRAs or which is acknowledged by a PRA to which a message has been sent.

The link quality between radios in the network is simulated by a standard transmission formula. This calculated value is probabilistic and changes with time. There is a graphical display of the radios and the paths that the messages take. The simulation provides a means to generate traffic on a network and to record the traffic which a given PRA sees.

In the graphics display of the network, each PRA is labelled with an alphabetical designation, and the length of each link (the distance between adjacent radios) is calculated. The programme next computes the propagation path loss for each link using a path loss calculation based on mobile communications over a flat terrain. This path loss calculation is modified each time a packet transmission through the link is simulated. When the simulation programme attempts a link transmission, the path loss calculation for that link is repeated and is modified by a random generator which applies a standard deviation of $\pm 8$dB. It is assumed that the PRA moves around within a half mile of its general location to avoid targetting. This simulates mobile radio propagation effects in the range of 1500-2000MHz. If the link quality is below an acceptable level, the message transfer is considered to have failed. In a real network, the message would be retried after a time out for acknowledgement. In the simulation, the message is retried on an unacceptable link quality six times before cancelling transmission.

As a message is passed through the network, the route it has taken and the quality of the links is sent in the header of the message. When a PRA, which is either a relay PRA, a destination PRA, or a nearby PRA, receives a message, it copies this record for its own data base.

In order to initialise the simulation (i.e., establish the data base for each PR at the initialisation stage of the AI demonstration), an arbitrary flood search is used. A random choice of originator for the flood search is used each time it is carried out. The random generator is used to choose 29 separate originators and destinations and carry out 29 flood searches. During this portion of the initialisation stage, information on the routing through one PRA is acquired by its associated data base and may be displayed on a terminal associated with the VAX simulation. The PRA receives routing information which comes to it by way of its operation as a relay from the messages it receives, and from acknowledgements from messages it sends. Acknowledgements are especially rich sources for information as they contain the path which the acknowledgement message took along with its link quality measures at each link, as well as the original path and its quality measures. What is contained in the data base and, ultimately, in the knowledge base, is derived from this information.

The transformation of the data base of paths into knowledge about link connectivity is done by the OPS5 production language modules. While it is possible to have every radio be able to perform this transformation, it is sufficient for a demonstration of the principles involved to have only one such PRA. The transformation involves storing all explicit paths, decomposing paths and quality measures into pair-wise elements, and incorporating these pair-wise elements into the knowledge base. Currently, this incorporation is done by averaging the link quality with the earlier link qualities and keeping track of the number of times a link has been used.

This form of network initialisation was chosen instead of the actual scenario described above in order to establish the network operation simply and rapidly for the simulation. In actual practice, with a network having all PRs with AI modules (PRAs), the knowledge base acquisition will take place over time or through information transferred from a neighbour as described above.

The remainder of the simulation follows the system operation described above, and, in particular, the operation with respect to Figure 3 above. This portion of the simulation is programmed in the OPS5 language and performs in the same way that a system would perform in actual operation in the field.

The demonstration begins with the initialisation by simulated flood searches as described above to establish the network configuration and link operation for the purpose of the AI demonstration. When this initialisation scheme has been completed, the chosen PRA has sufficient information stored in its knowledge base to allow transmission of routing headers for most of the destinations in the network. The operation of the initialisation procedure can be displayed, showing how the flood search packets propagate out through the network to the end points for each flood search that is initiated. Since the flood searches are originated from PRA elements by random choice, some originators may be repeated and some PRAs may not be used as originators at all. Note that this system of network initialisation could be viable if one wished to postulate a scenario in which all network PRAs arrive in their geographic locations simultaneously and wish to begin transmitting packets immediately. However, this scenario has not been used as a basis for the demonstration.

Following the network initialisation, packet transmissions through the network can be simulated by choosing a destination.

Suitable graphics display the propagation of the packet through the network from originator to destination. An originator will send the packet out with an incomplete header (broadcast), if it is not the PRA. If the originator is the PRA, it will check whether it knows a path from itself to the chosen destination. If it does, it addresses a message with that path and sends it out. If it does not, it will determine whether a path can be found by backward chaining through the links it knows about. If such a path can be found, the message is sent out and the path stored for future use. A second suggested path can also be requested. The first knowledge base and the inference engine will produce the answer. If no path can be found, the message is broadcast.

If the PRA receives a broadcast message (i.e., one with an incomplete header), it determines whether it knows a path from itself to the destination of the message. In this instance, the reasoning is the same as if it had originated the message.

Data can be displayed from the knowledge and data bases of the PRA. The information displayed will indicate time tag, link quality, and specified link routing sequence (from radio to radio) through the network to a given destination.

The packet radio system of the present invention makes practical the use of distributed routing in a PR network. A small lightly-used network may employ distributed routing with conventional algorithmic establishment of routing sequence indicators for the packet headers. However, a large active network using this method will require significant storage space and processing time to provide these routing indicators. On the other hand, the AI system of the present invention makes possible the independent establishment of good routing sequence indicators at each PRA. In addition, routing updates can be applied downstream by each PR since some of these PRs may possess more viable routing sequence data in their knowledge bases. The use of an efficient symbolic language, such as OPS5, for the AI software aids in keeping reasonable the size, weight, cost, and energy requirements for the microprocessor-based hardware of the AI module.

Another capability of the AI system of the present invention is its use in multimedia communication systems. Thus, as shown in the example of Figure 8, each of a plurality of communication systems (here, three systems — System A (packet radio), System B (satellite communication system), and System C (tropospheric communication system)) can have an AI module appended thereon. Each of these AI modules acts in the fashion of the one described above with reference to a packet radio network in selecting an optimum transmission path. However, the multimedia communication system of Figure 8 also contains a supervisory AI module 24 which operates in the same manner as the AI module for the packet radio system, i.e., in its use of a production system language, such as the OPS5 language, an inference engine, a knowledge base memory, a data base memory, and a memory base of heuristic rules. The multimedia AI system applies the heuristic rules to select an optimum transmission path among the best paths of each of the three systems, as selected by each individual AI module, 12, 22, and 23, for each system with which it is associated.

A feature of the present invention is a self-learning capability. The self-learning capability results from feedback to the rule base 5 or the induction engine 17 from the knowledge base (KB) 8, as shown by feedback paths 18 and 19 in Figure 3. For example, rules may be selected or deleted based on the heavy traffic or light traffic condition, jamming conditions, or routing avoidance conditions from the knowledge base. Also, rules may be selected or deleted based on successful path connection. If the suggested routing obtained from KB #2 is successfully connected, then the rules associated with this selection should be given greater relative weight than other rules. This weight will be communicated back to the rule base from the knowledge base #2.

Another feature of the present invention is the self-creating knowledge base. The knowledge base is created automatically from the inference engine, based on the inputs from the data base and the rule base. Conventional expert systems create their knowledge bases before operation.

Still another feature of the present AI system is its allowance for the possibility of growth in capabilities. This growth includes the development of more efficient rules, additional improved criteria, and self learning capabilities by the application of induction systems. In military applications, there is a significant improvement of network survivability by the elimination of vulnerable networks routing nodes (stations).

The aforementioned features of a self-learning capability, a self-creating knowledge base, and growth in capabilities have applicability in many other artificial intelligence applications.

**Claims**

1. A communication system comprising means for transmitting and/or receiving signals at radio frequencies and one or more means, each comprising an artificial intelligence module (12), each of which is coupled to an associated one of the transmitting and/or receiving means, in which at least one of the transmitting and/or receiving means is a packet radio (10) transmitting and/or receiving digital signals at radio frequencies, characterised in that each of the artificial intelligence modules (12) comprises an inference engine (4'), a memory (7) for storing data received from the receiving means (10) and for transmitting the data to the inference engine, a memory (5) for storing rules for an artificial intelligence system, the memory being connected to the inference engine, and a memory (8) for storing a knowledge base, the knowledge base memory being connected to the rule base memory and the inference engine, in that the knowledge base memory base (8) comprises a first knowledge base memory (13) containing all possible transmission routes, and a second knowledge base memory (14) containing only one optimum route for each transmission path from a particular transmitter to a particular receiver in the system and in that the rule base memory (5) may be preprogrammed prior to the establishment of the system and/or programmed after system establishment with a set of rules which are heuristic in that they allow for a plurality of routing transmissions to be selected once the minimum criteria established by the rule base are met.

2. A communication system as claimed in claim 1, characterised in that the rule base memory is a programmable read only memory (PROM).

3. A communication system as claimed in claim 1 or 2, characterised in that it comprises means for the establishing of connectivity paths by establishing a data base in memory (7) from data received by one of the radio receivers, scanning the data in the data base and matching this data with criteria from a rule base established in memory (5) so as to generate transmission routing sequences for the radio transmitters and receivers in a knowledge base memory (8).

4. A communication system as claimed in claim 3 characterised in that it further comprises means for updating the routing sequence information in the knowledge base in real time by causing one of the radio receivers to monitor transmissions among the radio transmitters and receivers.

5. A communication system as claimed in any previous claim, characterised by further comprising an induction engine (17) connected to the knowledge base memory (8) the rule base memory (5) and to an expert input port (16), functioning to formulate rules for the rule base memory.

6. A communication system as claimed in claim 5, characterised by further comprising means for performing the step of self-learning by means of feedback information from the knowledge base memory (8) to the rule base memory (5) to select proper rules and/or delete improper rules.

7. A communication system as claimed in claim 6, characterised in that the rule selection or deletion is based on traffic conditions and/or connection successfulness.

8. A communication system as claimed in claim 1, characterised in that the transmitting and/or receiving means are grouped in sub-groups of the transmitting and/or receiving means, at least two of the sub-group member means using different media, and in that it further comprises an additional artificial intelligence module associated with the sub-group for selecting an optimum transmission path among the best paths of each of the sub-group member means.

9. A communication system as claimed in claim 8, characterised in that the step of establishing connectivity paths results in distributed routing of communications among the plurality of transmitters and receivers.

**Patentansprüche**

1. Kommunikationssystem, mit Mitteln zum Senden und/oder Empfangen von Signalen im Funkfrequenzbereich und mit einem oder mehreren Mitteln, von denen jedes einen Modul (12) künstlicher Intelligenz aufweist, von denen jeder mit einem zugeordneten Sende- und/oder Empfangsmittel gekoppelt ist, wobei zumindest eines der Sende- und/oder Empfangsmittel ein Datenpaket-Funkgerät (10) ist, das digitale Signale im Funkfrequenzbereich sendet und/oder empfängt, dadurch gekennzeichnet, daß jeder Modul (12) künstlicher Intelligenz ein Interferenzgerät (4'), einen Speicher (7) zum Speichern von vom Empfangsmittel (10) empfangenen Daten und zum Übertragen der Daten en das Interferenzgerät, einen mit dem Interferenzgerät verbundenen Speicher (5) zum Speichern von Regeln für ein künstliches Intelligenzsystem und einen Speicher (8) zum Speichern eines Grundwissens aufweist, welcher Grundwissensspeicher mit dem Grundregelspeicher und dem Interferenzgerät verbunden ist, daß der Grundwissensspeicher (8) einen ersten Grundwissensspeicherteil (13), der alle möglichen Übertragungsleitwege enthält, und eine zweiten Grundwissensspeicherteil (14) aufweist, der nur einen optimalen Leitweg für jeden Übertragungspfad von einem bestimmten Sender zu einem bestimmten Empfänger im System enthält, und daß der Grundregelspeicher (5) vor der Errichtung des Systems vorprogrammiert und/oder nach der Systemerichtung mit einem Satz von Regeln programmiert werden kann, die derart heuristisch sind, daß für eine Vielzahl von einmal auszuwählenden Leitwegübertragungen, die Minimumkriterien, die von der Grundregel festgelegt sind, erfüllt werden können.

2. Kommunikationssystem nach Anspruch 1, dadurch gekennzeichnet, daß der Grundregelspeicher ein programmierbarer Nur-Lese-Speicher (PROM) ist.

3. Kommunikationssystem nach Anspruch 1 oder 2, dadurch gekennzeichnet, daß es Mittel zum Errichten von Verbindungswegen durch Aufbauen einer Datenbank im Speicher (7) aus den von einem der Funkempfänger empfangenen Daten, durch Abtasten der Daten in der Datenbank und durch Anpassen dieser Daten an die Kriterien von einer im Speicher (5) festgelegten Grundregel aufweist, um so die Übertragungsleitwegfolgen für die Funksender und -empfänger im Grundwissensspeicher (8) zu erzeugen

4. Kommunikationssystem nach Anspruch 3, dadurch gekennzeichnet, daß es ferner Mittel aufweist, um die Leitwegfolgeinformation im Grundwissen in Realzeit auf den neuesten Stand zu bringen, dadurch, daß einer der Funksender die Übertragungen zwischen den Funksendern und -empfängern überwacht.

5. Kommunikationssystem nach einem der vorhergehenden Ansprüche, dadurch gekennzeichnet, daß es ferner ein Induktionsgerät (17) aufweist, das mit dem Grundwissensspeicher (8), dem Grundregelspeicher (5) und einem Facheingangsanschluß (16) verbunden ist, mit dem die Regeln für den Grundregelspeicher formulierbar sind.

6. Kommunikationssystem nach Anspruch 5, dadurch gekennzeichnet, daß es ferner Mittel zum Ausführen des Selbstlernschrittes mit Hilfe von Rückkopplungsinformationen vom Grundwissenspeicher (8) zum Grundregelspeicher (5) aufweist, um geeignete Regeln auszuwählen und/oder ungeeignete Regeln wegzulassen.

7. Kommunikationssystem nach Anspruch 6, dadurch gekennzeichnet, daß die Regelauswahl oder das Regelweglassen auf den Verkehrsbedingungen und/oder dem Verbindungserfolg basiert.

8. Kommunikationssystem nach Anspruch 1, dadurch gekennzeichnet, daß die Sende- und/oder Empfangsmittel in Untergruppen von Sende- und/oder Empfangsmittel unterteilt sind, wobei mindestens zwei der Untergruppenmittel unterschiedliche Medien benutzen, und daß es ferner einen zusätzlichen Modul künstlicher Intelligenz aufweist, der der Untergruppe zum Auswählen eines optimalen Übertragungspfades unter den besten Pfaden jedes Untergruppenmittels zugeordnet ist.

9. Kommunikationssystem nach Anspruch 8, dadurch gekennzeichnet, daß der Schritt des Errichtens von Verbindungspfaden in verteilten Kommunikationsleitwegen unter der Vielzahl von Sendern und Empfängern resultiert.

**Revendications**

1. Un système de communication comprenant des moyens pour émettre et/ou recevoir des signaux à des fréquences radio et un ou plusieurs moyens, comprenant chacun un module à intelligence artificielle (12), dont chacun est relié à un moyen d'émission et/ou de réception associé, dans lequel au moins un des moyens d'émission et/ou de réception est une radio par paquets (10) qui émet et/ou reçoit des signaux numériques à des fréquences radio, caractérisé en ce que chacun des modules à intelligence artificielle (12) comprend un moteur d'inférence (4'), une mémoire (7) pour stocker des données reçues des moyens de réception (10) et pour transmettre les données au moteur d'inférence, une mémoire (5) pour stocker des règles pour un système à intelligence artificielle, la mémoire étant connectée au moteur d'inférence, et une mémoire (8) pour stocker une base de connaissances, la mémoire de base de connaissances étant connectée à la mémoire de base de règles et au moteur d'inférence, en ce que la base de mémoire de base de connaissances (8) comprend une première mémoire de base de connaissances (13) contenant tous les itinéraires de transmission possibles et une seconde mémoire de base de connaissances, (14) ne contenant qu'un itinéraire optimal pour chaque trajet de transmission d'un émetteur particulier à un récepteur particulier dans le système, et en ce que la mémoire de base de règles (5) peut être préprogrammée avant l'établissement du système et/ou programmée après l'établissement du système avec un ensemble de règles qui sont heuristiques en ce qu'elles permettent de sélectionner plusieurs transmissions d'acheminement dès que les critères minimum établis par la base de règles sont remplis.

2. Un système de communication conforme à la revendication 1, caractérisé en ce que la mémoire de base de règles est une mémoire morte programmable (PROM).

3. Un système de communication conforme à la revendication 1 ou 2, caractérisé en ce qu'il comprend des moyens pour établir des trajets de connectivité en constituant une base de données dans la mémoire (7) à partir des données reçues par l'un des récepteurs radio, en lisant les données dans la base de données et en les faisant coïncider avec des critères provenant d'une base de règles établie dans la mémoire (5) de façon à générer des séquences d'acheminement de transmission pour les émetteurs et récepteurs radio dans une mémoire de base de connaissances (8).

4. Un système de communication conforme à la revendication 3, caractérisé en ce qu'il comprend également des moyens pour mettre à jour en temps réel les informations sur les séquences d'acheminement de la base de connaissances en faisant en sorte que l'un des récepteurs radio surveille les transmissions entre les émetteurs et les récepteurs radio.

5. Un système de communication conforme à l'une quelconque des revendications précédentes, caractérisé en ce qu'il comprend également un moteur d'induction (17) connecté à la mémoire de base de connaissances (8), à la mémoire de base de règles (5) et à un accès d'entrée expert (16), fonctionnant pour formuler des règles pour la mémoire de base de règles.

6. Un système de communication conforme à la revendication 5, caractérisé en ce qu'il comprend également des moyens pour réaliser la phase d'auto-apprentissage au moyen d'informations de rétroaction à partir de la mémoire de base de connaissances (8) vers la mémoire de base de règles (5) pour sélectionner des règles adaptées et/ou annuler des règles inadaptées.

7. Un système de communication conforme à la revendication 6, caractérisé en ce que la sélection ou l'annulation de règles est basée sur des états de trafic et/ou sur la réussite d'une connexion.

8. Un système de communication conforme à la revendication 1, caractérisé en ce que les moyens d'émission et/ou de réception sont groupés en sous-groupes des moyens transmission et/ou de réception, au moins deux moyens d'éléments de sous-groupes utilisant différents supports, et en ce qu'il comprend également un module à intelligence artificielle supplémentaire associé au sous-groupe pour sélectionner un trajet de transmission optimal parmi les meilleurs trajets de chacun des moyens d'éléments de sous-groupes.

9. Système de communication conforme à la revendication 8, caractérisé en ce que la phase d'établissement de trajets de connectivité se traduit par un acheminement réparti de communications parmi la pluralité d'émetteurs et de récepteurs.

## Fig.1.

POINT TO POINT ORIGINATOR.

BROADCAST ORIGINATOR

POINT TO POINT DESTINATION

## Fig.2.

PROM (RULE BASE)

I/O CONTROL

M8751H OR 8086

RAM

KNOWLEDGE BASE

DATA BASE

MEMORY

KEYBOARD AND BUFFER

## Fig.5.

DATA BASE

WORKING MEMORY

RULE INTERPRETER (INFERENCE ENGINE)

PRODUCTION (ROLL)MEMORY

KNOWLEDGE BASE

## Fig.3.

## Fig.8.

THREE TYPES OF TRANSCEIVERS AT ONE NODE.

## Fig.4.

PR'S AND PRA'S IN
NETWORK.

## Fig.6.

FIRST KNOWLEDGE BASE (13)

| TIME TAG | PATHS | LINKS | MIN.LINK QUALITY. | # OF LINKS |
|----------|-------|-------|-------------------|------------|
| $t_i$ | xi | xogi | $L_i$ | 3 |
| $t_{i+1}$ | xi | $xC_jfi$ | $L_{i+1}$ | 4 |
| $t_{i+2}$ | xi | xAogi | $L_{i+2}$ | 4 |
| $t_{i+3}$ | xd | xged | $L_{i+3}$ | 3 |
| $t_{i+4}$ | xd | xgebd | $L_{i+4}$ | 4 |

SECOND KNOWLEDGE BASE (14)

| TIME TAG | PATH | LINKS | LINK TRAFFIC CONDITION. |
|----------|------|-------|-------------------------|
| $t_j$ | xi | xogi | LIGHT |
| $t_{j+1}$ | xd | xged | HEAVY |
| $t_{j+2}$ | xw | xpnw | LIGHT |
| $t_{j+3}$ | xe | xge | LIGHT |

*Fig.7.*  ITTDCD ARTIFICAL INTELLIGENCE DEMONSTRATION.
A PRINTOUT FROM #1 KNOWLEDGE BASE OF PPR (X)

| START | END | MINIMUM LINK QUALITY (RELATIVE LEVEL IN dB) | NUMBER OF LINKS | PATH |
|---|---|---|---|---|
| x | f | -180 | 3 | xCjf |
| C | f | -180 | 2 | Cjf |
| j | f | -180 | 1 | jf |
| x | m | -185 | 2 | xCm |
| x | l | -166 | 2 | xgl |
| x | w | -186 | 2 | xpw |
| x | w | -181 | 3 | xpnw |
| x | i | -190 | 3 | xogi |
| x | i | -190 | 4 | xCjfi |
| x | i | -190 | 4 | xAogi |
| x | i | -190 | 4 | xBogi |
| x | q | -185 | 3 | xgrq |
| x | i | -188 | 2 | xgi |
| x | p | -158 | 1 | xp |
| p | n | -181 | 1 | pn |
| x | B | -175 | 1 | xB |
| x | d | -192 | 3 | xgcd |
| x | d | -180 | 4 | xgebd |
| x | o | -186 | 1 | xo |
| x | z | -191 | 3 | xpnz |
| x | n | -181 | 2 | xpn |
| x | v | -185 | 2 | xgv |
| e | a | -190 | 1 | ea |
| g | a | -190 | 2 | gea |
| x | a | -190 | 3 | xgea |
| x | z | -187 | 2 | xCz |
| e | c | -175 | 1 | ec |
| g | c | -175 | 2 | gec |
| x | c | -175 | 3 | xgec |
| g | e | -184 | 1 | ge |
| x | e | -184 | 2 | xge |
| x | A | -172 | 1 | xA |
| x | j | -182 | 2 | xCj |